# EUROPEAN PATENT SPECIFICATION

(11) **EP 3 027 041 B1**
(45) Date of publication and mention of the grant of the patent: **13.11.2019**
(21) Application number: 14832502.0
(22) Date of filing: 31.07.2014
(51) Int. Cl.: A23G 9/32, A23G 9/24, A23G 9/44, A23G 9/52, A23G 9/22, A23G 9/28

(54) **A SURFACE PATTERNED FROZEN DESSERT MANUFACTURING METHOD AND APPARATUS FOR SAME**
HERSTELLUNGSVERFAHREN UND -VORRICHTUNG FÜR OBERFLÄCHENGEMUSTERTE GEFRORENE SÜSSSPEISE
PROCÉDÉ ET APPAREIL POUR FABRIQUER UN DESSERT GLACÉ PORTANT UN MOTIF SUR SA SURFACE

(30) Priority: 31.07.2013 JP 2013159533
(43) Date of publication of application: 08.06.2016
(73) Proprietor: General Mills, Inc., Minneapolis, Minnesota 55440 (US)
(72) Inventor: ANDO, Kaori, Tokyo 107-0051 (JP); TSUKAMOTO, Kanae, Tokyo 107-0051 (JP); KOIZUMI, Shoko, Tokyo 107-0051 (JP); HIRAMATSU, Masaru, Yokohama-shi Kanagawa 241-0023 (JP); SEKINE, Kazuhiko, Yokohama-shi Kanagawa 241-0023 (JP); SAGAWA, Masashi, Yokohama-shi Kanagawa 241-0023 (JP); SHINOZAKI, Akira, Yokohama-shi Kanagawa 241-0023 (JP); ARATANI, Jun, Yokohama-shi Kanagawa 241-0023 (JP); MATSUDA, Hajime, Yokohama-shi Kanagawa 241-0023 (JP)
(74) Representative: Vossius & Partner Patentanwälte Rechtsanwälte mbB
(86) International application number: PCT/JP2014/070802
(87) International publication number: WO 2015/016389

(56) References cited:
- GB-A- 2 255 704
- JP-A- H10 215 774
- JP-A- 2000 050 802
- JP-A- 2002 142 682
- JP-A- 2002 142 682
- JP-A- 2002 524 063
- JP-A- 2008 506 396
- JP-U- 3 121 400
- US-B1- 6 203 831
- US-B1- 6 203 831
- Dreamagical Sweets: "Double Cheese Blue Berry Tarte ????????????????????? ( ??,???? ) - Dreamagical Sweets - Yahoo!???", Yahoo, 26 October 2007 (2007-10-26), pages 1-4, XP055321532, Retrieved from the Internet: URL:http://blogs.yahoo.co.jp/pooh3tomomi/3 4366285.html [retrieved on 2016-11-22]
- 'Double Cheese Blue Berry Tarte' 26 July 2010, XP055321532 Retrieved from the Internet: <URL:http://blogs.yahoo.co.jp/pooh3tomomi/3 436628 5.html> [retrieved on 2014-10-27]

## Description

### [Technical field]

The invention concerns to a surface patterned frozen dessert manufacturing method and apparatus for same, and more particularly to a manufacturing method for a frozen dessert such as ice cream in which the top surface of an ice cream layer is flat and a pattern is formed on the top surface layer of the ice cream layer, and to an apparatus for same.

### [Background art]

Because of their ability to increase preference and impart diversity to taste and texture, decorative patterns on the surface of ice cream layers in frozen desserts such as ice cream are in high demand, and said decorative patterns are formed by various methods.

As a conventional method for manufacturing ice cream on which surface decoration is formed, a method has been proposed whereby a sauce is dripped in small circular shapes from a nozzle onto the surface of an ice cream layer, and a linear object, the tip of which is thrust into the top layer portion of the ice cream, is moved so as to cross the sauce dripped on in small circles.

As a conventional ice cream on which surface decoration is formed, a patterned frozen dessert product on which a three dimensionally-formed pattern is drawn has been proposed (for example, see patent document 2) in which ice cream is extruded from an animal or plant-shaped nozzle through an cream masking/dispersion plate and mesh plate onto the surface of ice cream filled in a requisite amount into a container, then cut at a specified thickness to form a shape sufficient to bring to mind a plant or animal; an oleaginous food is then further extruded from a temperature-adjusted filling nozzle onto the formed ice cream surface.

A method has been proposed (see, for example, Patent Document 3) whereby, as a decorated food made from a fluid food material such as ice cream in which a surface decoration is formed, the decorated food takes the form of two or more fluid food materials of differing colors, with the outer shape of said form matched to the inside surface shape of indentation[s] on a mold, and fluid ingredient of the fluid food material of one color inside the indentation being discharged from a nozzle to make a base, and a fluid food ingredient consisting of one or more colors of a fluid food material of a color different from that of the base is discharged from a nozzle different from the nozzle above into indentation[s] in the mold and rotated to form a swirling shape.

Although it pertains to chocolate rather than to frozen desserts such as ice cream, a method for manufacturing ring-shaped decorative chocolate of a predetermined thickness has been proposed (see, for example, Patent Document 4) using a pattern-forming apparatus in which, using two or more different colored melted chocolates as a base material, multiple melted chocolates are deposited in the same molds, then formed into a continuous pattern by rotating either a stirring tool or the mold.

### [Citation List]

### [Patent Literature]

Patent Document 1: Japanese Patent No.3654511
Patent Document 2: Japanese Utility Model No.3121400
Patent Document 3: Japanese Patent No.3808207
Patent Document 4: Japanese Patent Disclosure No.H10-215774

### [Summary of Invention]

### [Technical Problem]

According to the ice cream manufacturing method proposed in Patent Document 1, the step by which a sauce is directly dripped in small circular shapes onto the surface of an ice cream layer and a rigid linear object is stuck into the interior of the ice cream layer must be performed before the ice cream layer hardens. In such cases, there is a risk that movement of the linear object will cause the ice cream material to be partially exposed between sauce layers, or ice cream layers to be peeled away, such that the pattern created by the sauce is deformed and distorted, making it unsightly.

If sauce is directly dripped onto the ice cream surface, the color of the sauce dripped onto the frozen stored [ice cream] can bleed onto the ice cream surface, and may cause problems with ice cream storage.

Assume hypothetically that a sauce layer is formed of two layers: a first (bottom) layer formed on the ice cream layer, and a second (top) layer dripped in small circles on top of the first layer. In such cases, as well, the linear object is made to penetrate the ice cream layer [as it] moves, so the linear object must be moved within the ice cream layer before the ice cream layer hardens. As a result, there is a risk that the ice cream material will be partially exposed on the second sauce layer, or the ice cream layer will be left bare, and the streamlined pattern created by the sauce layer may deform and become unsightly. In addition, it is conceivable that sauce in the bottom sauce layer can adhere to the bottom end portion (tip) of the rigid linear object and enlarge, making it difficult to form the desired well-defined inscribed pattern.

According to the patterned frozen dessert product proposed in Patent Document 2, a pattern is formed by an ice cream layer and a chocolate sauce or other oleaginous food product on a frozen dessert, but that pattern can assume only an extremely simple structure and shape consisting of building blocks formed by a die known as a nozzle. Therefore in the patterned frozen dessert product proposed in Patent Document 2, there is no major difference over previous products relative to the effect of increasing ice cream preference or increasing diversity of taste or consistency. In addition, the manufacturing efficiency of the manufacturing method by which a shape or pattern is formed by a template is extremely poor.

The surface decoration proposed by Patent Document 3 is a swirling surface pattern using two or more colors of a fluid food material, but basically, as noted in Paragraph 0007 of Patent Document 3, the pattern can be made consistent not only on the surface, but into the interior, by combining differing first and second fluid food product materials into one piece so that [the pattern] appears in an alternating ring shape down to a desired thickness in the interior, and a consistent taste can be obtained not only on the surface but in the interior. Therefore using the surface decoration of Patent Document 3, it is not possible to form highly decorative and attractive surface patterns like those of a heart pattern, etc. of the present invention merely by forming simple swirling surface patterns.

The surface decoration of cited reference 3 is formed by the fluid food material itself, which corresponds to the ice cream material of the present invention. Therefore cited reference 3 makes no suggestion whatsoever of forming a surface pattern by another material such as the sauce material of the present invention.

There is nothing whatsoever in the chocolate manufacturing method proposed by Patent Document 4 which limits the temperature environment of the first and second chocolate materials at the time of deposition or at the time of stirring using a stirring tool. Therefore the chocolate temperature can be freely set. However, if the method of cited reference 4 were applied to the placement of a double sauce layer on an ice cream layer as in the present invention, the sauce material on the ice cream layer would have the physical property of hardening when cooled by the ice cream layer, therefore when the sauce material was deposited or stirred by a stirring tool, the sauce material would gradually harden and wrap around the stirring tool, making it difficult to form the desired pattern using to the stirring tool.

### (Object of the Invention)

The present invention was undertaken in light of the above-described problems pertaining to conventional ice cream or other frozen desserts or fluid foods and manufacturing methods for same, and has the object of providing a manufacturing method for a surface patterned frozen dessert having streamlined patterns of multiple colors of sauce material on the top surface of an ice cream layer such that no bleeding of the sauce material colors into the ice cream layer occurs in normal ice cream storage conditions and the ice cream material is not exposed to the outside to become unsightly, as well as an apparatus for same.

The present invention also has the object of providing a manufacturing method for a frozen dessert with fine, well-defined, highly decorative surface patterns, and a manufacturing method and an apparatus for same, whereby sauce material does not wrap around an inscribing rod member corresponding to the linear object or stirring tool, and therefore the inscribing rod member does not enlarge.

### [Solution of Problem]

Disclosed herein is a surface patterned frozen dessert having, within a cup, an ice cream layer, a first sauce material layer on said ice cream layer, and a second sauce layer of a different color from the first sauce layer, partially injected on the top surface of the first sauce layer after the first sauce material, whereby the first sauce layer and second sauce layer are stirred together to form an inscribed pattern.

Embodiments of the surface patterned frozen dessert are as follows:
Multiple second sauce layers are formed on the same circle.

A single second sauce layer is formed.

The ice cream is changed to popsicle, lacto-ice, or ice milk.

The first invention is a surface patterned frozen dessert manufacturing method having:
a step for flattening the top surface of an ice cream layer;
a step for forming a first sauce layer on the top surface of the flattened ice cream layer;
a step for forming, at the top layer portion of the first sauce layer, at least one second sauce layer of a color different from the first sauce layer, on the same sauce pattern circle;
and a step for moving an inscribing member along the circumference of the sauce pattern, whereby the inscribing member is supported so that a free end thereof can be displaced relative to the support position in the circumferential direction of the sauce pattern.

Embodiments of the first invention are as follows.

The inscribing member is axially supported so as to be able to oscillate in the circumferential direction of the sauce pattern.

Prior to the step for forming a first sauce layer, there is a step for cooling and hardening the ice cream surface.

The step in which the ice cream surface is cooled and hardened comprises a step for pouring in liquid nitrogen in a liquid state.

The second invention is a surface patterned frozen dessert manufacturing apparatus having:
an ice cream supply portion for forming an ice cream layer by filling ice cream material into a cup;
an ice cream flattening portion for flatting the top surface of the ice cream layer;
a first sauce material supply portion for forming a first sauce layer on the top surface of the flattened ice cream layer;
a second sauce material supply portion for providing, at the top layer portion of the first sauce layer, at least one second sauce layer of a color different from the first sauce layer, on the same sauce pattern circle;
and a sauce inscribing portion for moving an inscribing member, supported so that a free end thereof can be displaced relative to a support position in the circumferential direction of the sauce pattern, along the circumference of the sauce pattern.

Embodiments of the second invention are as follows:
The Inscribing member is axially supported so as to be able to oscillate in the circumferential direction of the sauce pattern.

The apparatus furthermore has an ice cream material hardening portion for cooling and hardening the ice cream surface.

The ice cream material hardening portion is a hardening portion by which liquid nitrogen is poured in a liquid state.

### [Advantageous Effects of Invention]

The present invention comprises a manufacturing method for a surface patterned frozen dessert, having a streamlined pattern using multiple colored sauce materials on the top surface of an ice cream layer, whereby no bleeding of sauce material color into the ice cream layer occurs in a normal ice cream storage state, and ice cream material is not exposed to the outside to become unsightly, and apparatus for same.

Using the present invention, a frozen dessert with fine, well-defined, highly decorative surface patterns and a manufacturing method and apparatus for same can be comprised such that sauce material does not wrap around an Inscribing rod member corresponding to the linear object or stirring tool, and therefore the inscribing rod member does not enlarge.

### [Brief Description of Drawings]

Fig. 1: A schematic diagram of an ice cream manufacturing apparatus according to an embodiment of the invention.
Fig. 2: A schematic diagram of an ice cream material supply portion in an ice cream manufacturing apparatus according to an embodiment of the invention.
Fig. 3: A schematic diagram of the surface flattening portion of an ice cream manufacturing apparatus according to an embodiment of the invention.
Fig. 4: A schematic diagram of an ice cream material hardening portion in an ice cream manufacturing apparatus according to an embodiment of the invention.
Fig. 5: A schematic diagram of a first ice cream material supply portion in an ice cream manufacturing apparatus according to an embodiment of the invention.
Fig. 6: A schematic diagram of a second ice cream material supply portion in an ice cream manufacturing apparatus according to an embodiment of the invention.
Fig. 7: An operational explanatory diagram of a second ice cream material supply portion in an ice cream manufacturing apparatus according to an embodiment of the invention.
Fig. 8: A cross section of a cup in a state whereby the supply of material by an ice cream manufacturing apparatus according to an embodiment of the invention is complete.
Fig. 9: A structural diagram of a sauce inscribing portion in an ice cream manufacturing apparatus according to an embodiment of the invention.
Fig. 10: A structural diagram of an insertion member in an ice cream manufacturing apparatus according to an embodiment of the invention.
Fig. 11: A plan view of ice cream manufactured according to an embodiment of the invention.
Fig. 12: A structural diagram of a variant example of an insertion member in an ice cream manufacturing apparatus according to an embodiment of the invention.
Fig. 13: A structural diagram of a first variant example of an inscribing rod portion in an ice cream manufacturing apparatus according to an embodiment of the invention.
Fig. 14: A structural diagram of a second variant example of an inscribing rod portion in an ice cream manufacturing apparatus according to an embodiment of the invention.
Fig. 15: A vertical cross section of ice cream manufactured according to an embodiment of the invention.
Fig. 16: An operational explanatory diagram of a first variant example of an ice cream material supply portion in an ice cream manufacturing apparatus according to an embodiment of the invention.
Fig. 17: A plan view of ice cream manufactured according to a second variant example of the operation of the second sauce material supply portion in an ice cream manufacturing method according to an embodiment of the present Invention.
Fig. 18: A plan view of ice cream manufactured according to a first variant example of the operation of a second sauce material supply portion in an ice cream manufacturing method according to an embodiment of the present invention.
Fig. 19: A plan view of ice cream manufactured according to a second variant example of the operation of a second sauce material supply portion in an ice cream manufacturing method according to an embodiment of the present invention.

### [Description of Embodiments]

Below we explain examples of a surface-patterned ice cream and apparatus for same, based on diagrams.

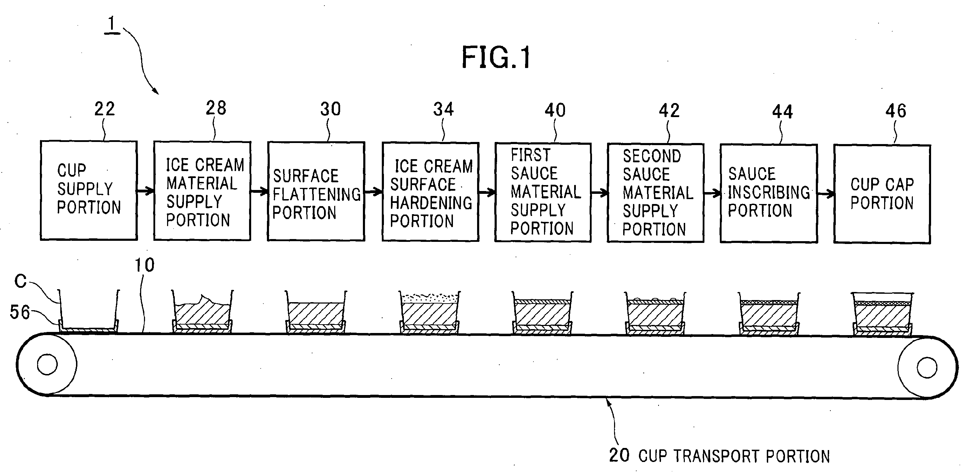

As shown in Fig. 1, surface patterned-ice cream manufacturing apparatus 1 disposes along the direction of transport of cup transport portion 20, in sequence, a cup supply portion 22, an ice cream material supply portion 28, a surface flattening portion 30, an ice cream material surface hardening portion 32, a first sauce material supply portion 40, a second sauce material supply portion 42, a sauce inscribing portion 44, and a cup cap portion 46, on cup transport portion 20, which includes a conveyor belt 10 for continuously transporting cup C.

Cup supply portion 22 stacks and contains cups C in a cup holder (not shown) using known methods. Cups C are supplied one at a time from a cup holder (not shown) to a cup receiving portion 56 on conveyor belt 10.

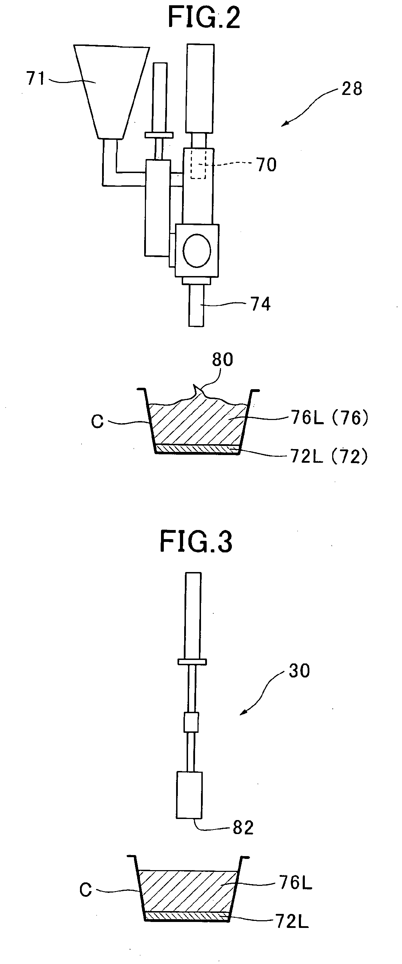

As shown in Fig. 2, ice cream material supply portion 28 injects ice cream material 76 contained in ice cream container 71 through ice cream material supply nozzle 74 into cups C transported by conveyor belt 10. Ice cream material supply portion 28 supplies secondary ice cream material 72 as needed through nozzle 70 to form secondary ice cream layer 72L.

The temperature at time of injection of ice cream material 76 is -3.0°C to -7.5°C. As shown in Fig. 2, the viscosity of ice cream material 76 injected into cup C is such that an ice cream material projecting portion 80 is formed at the center of its surface.

Surface flattening portion 30, as shown in Fig. 3, moves a pushing member 82 cooled to approximately -100°C or below in a downward direction. This squashes the ice cream material projecting portion 80 formed at the center of the surface of ice cream material 76 injected into cup C, flattening the surface of ice cream layer 76L.

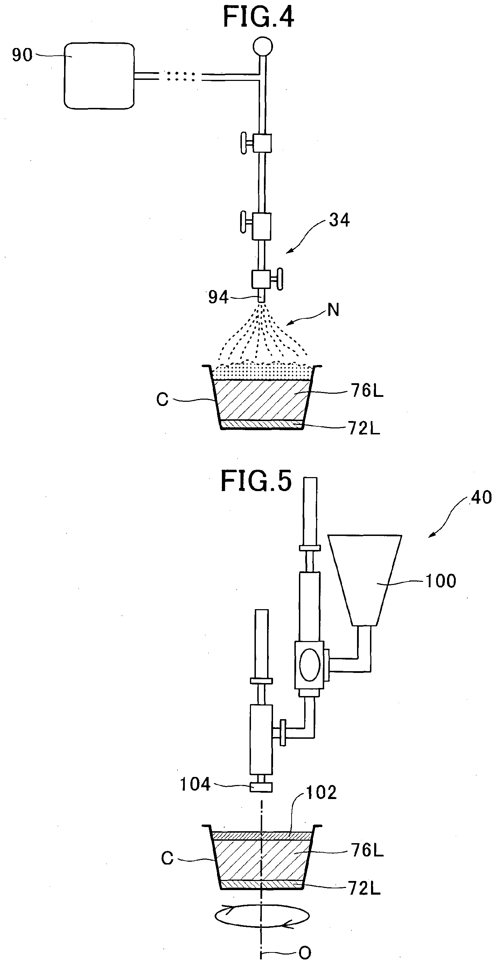

As shown in Fig. 4, ice cream material surface hardening portion 34 causes a liquid nitrogen nozzle 94 communicating with a liquid nitrogen tank 90 holding liquid nitrogen to inject liquid nitrogen in a liquid state onto the ice cream layer 76L in cup C, cooling and hardening the surface of ice cream layer 76L to approximately -10°C to -15°C.

By cooling the surface of ice cream layer 76L using ice cream material surface hardening portion 32, an effect can be obtained whereby ice cream material is prevented from rising onto the first sauce, described below, making the surface of the frozen dessert unsightly.

As shown in Fig. 5, first sauce material supply portion 40 injects first sauce material 102 contained in first sauce material container 100 from first sauce material supply nozzle 104 onto hardened ice cream layer 76L while rotating cup C around its vertical axis. First sauce material 102 is selected from among chocolate sauce, kuromitsu ["black honey"] sauce, fruit sauce (berry sauce, orange sauce, apple sauce, etc.), condensed milk sauce, white chocolate sauce, etc. If first sauce material 102 contains fruit puree, it is preferable that the puree added percentage (content percentage) not be greater than 20%.

The viscosity of first sauce material 102 supplied in first sauce material supply portion 40 is such that it becomes approximately planar immediately after injection. However if the viscosity of first sauce material 102 is high and a projection[s] of first sauce material 102 is formed on the surface and does not disappear, vibration may be imparted to cup C with a cup vibrating apparatus (not shown) to flatten first sauce material 102.

For first sauce material 102, a favorable viscosity at time of injection is 100,000 cp to 250 cp, and preferably 57,000 cp to 500 cp. A thickness of 1 mm to 3 mm is preferred for the first sauce material, although this is not a uniform thickness.

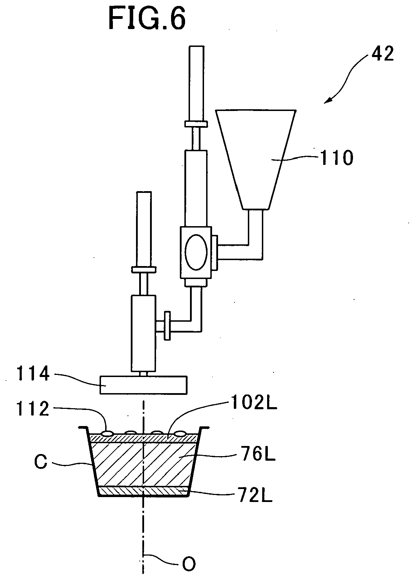

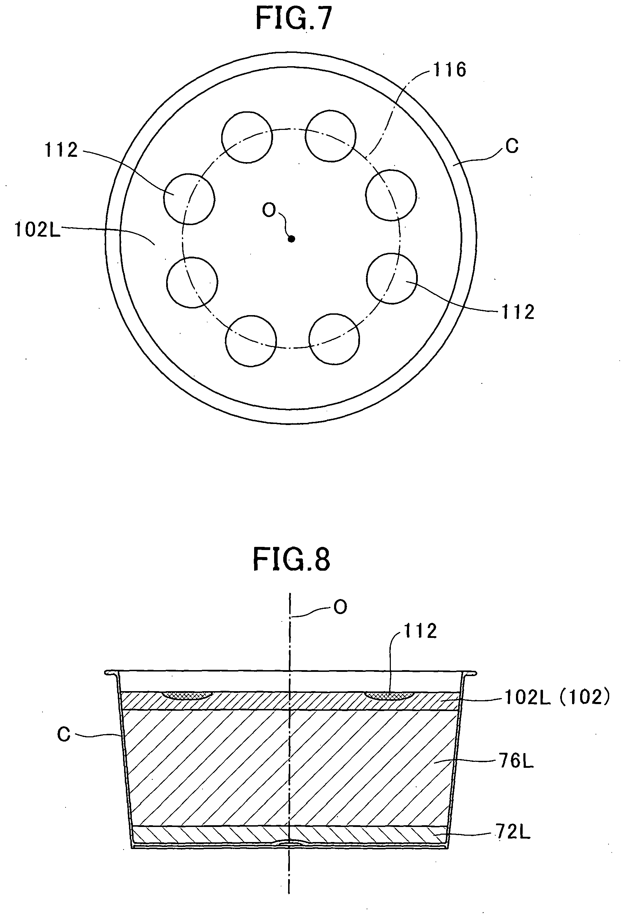

Second sauce material supply portion 42, as shown in Fig. 6, is disposed above cup C, and second sauce material 112 is dripped at desired location[s] on sauce pattern circle 116 (see Fig. 7), which is disposed at the top of cup C and is centered on O. Second sauce material supply portion 42 has a nozzle member (not shown) disposed to correspond to sauce pattern circle 116 within second sauce material supply nozzle 114. There are 8 nozzle members in this example, positioned at uniform intervals.

Second sauce material 112 is selected from among white chocolate [sauce], condensed milk sauce, fruit sauce (berry sauce, orange sauce, apple sauce, etc.) or the like. For second sauce material 112, a favorable viscosity at time of injection is 100,000 cp to 200, and preferably 10,000 cp to 300 cp.

As shown in Fig. 8, due to the specific gravity and viscosity relationship between first sauce material 102 and second sauce material 112, after being injected the entirety of second sauce material 112 supplied in second sauce material supply portion 42 settles onto the top portion of first sauce layer 102L, which is still in a melted state, and the top surfaces of first sauce layer 102L and second sauce material 112 are approximately coplanar.

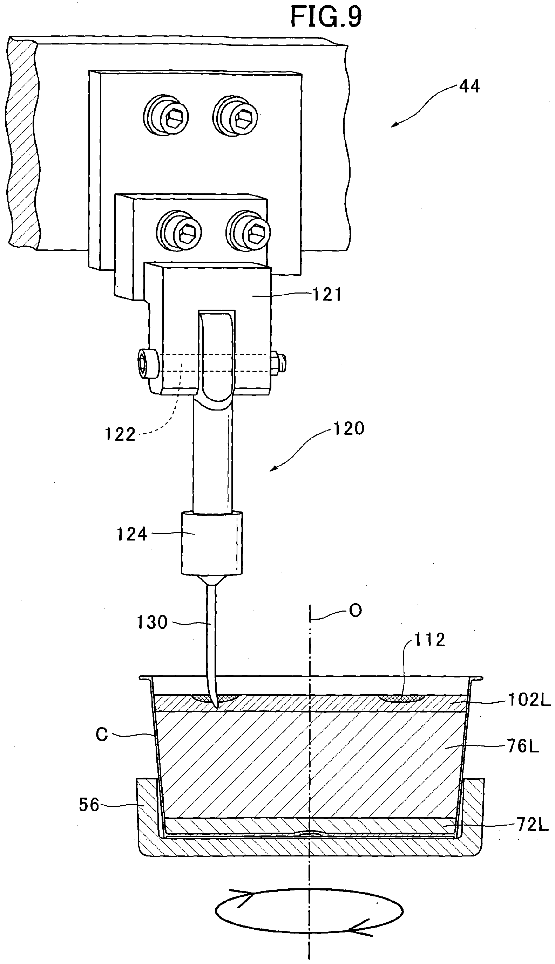

As shown in Fig. 9, sauce inscribing portion 44 inscribes first sauce layer 102L and second sauce material 112 formed in cup C using inscribing rod portion 120. I.e., inscribing rod portion 120 is inserted into first sauce layer 102L and second sauce material 112. Next, cup C is rotated about its center O. As a result, inscribing rod portion 120 travels on sauce pattern circle 116. The bottom end portion of inscribing rod portion 120, i.e., the bottom end portion of insertion member 130 described below, travels within first sauce layer 102L when inscribing, but does not remove ice cream layer 76L.

The bottom portion of insertion member 130, referenced to sauce inscribing portion 44, is tilted to the downstream side of first sauce layer 102L and second sauce material 112. Therefore even if first sauce layer 102L and second sauce material 112 wrap around or otherwise adhere to insertion member 130 causing insertion member 130 substantively expands, the amount of enlargement of the upper part which inscribes second sauce material 112 is less that of the lower part, and the effect imparted to the inscribed pattern in second sauce material 112 is small. As a result, a desired inscribed pattern can be distinctly formed in second sauce material 112.

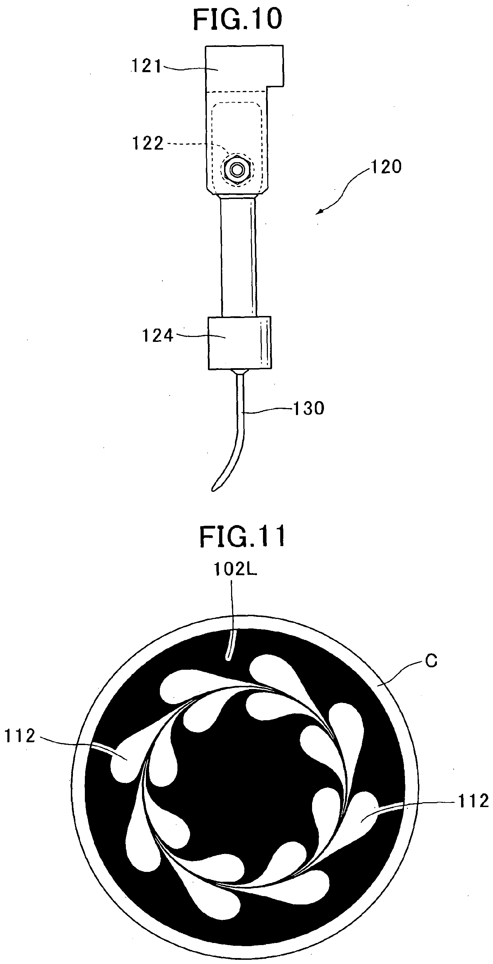

As shown in Figs. 9 and 10, inscribing rod portion 120 is supported by inscribing rod support body 121 so as to be able to oscillate along sauce pattern circle 116 through oscillation axis 122. Scraping rod portion 120 has a weight member 124 and an insertion member 130 attached to the bottom portion of weight member 124, which is inserted into first sauce layer 102L and second sauce material 112. Insertion member 130 is curved so that the lower portion thereof is downstream of oscillation axis 122, so as to follow the flow of first sauce layer 102L and second sauce material 112.

In sauce inscribing portion 44, first sauce layer 102L and second sauce material 112 are inscribed along sauce pattern circle 116 by insertion member 130. The inscribed parts of the dots of second sauce material 112 are separated from insertion member 130 after being moved a small distance together with insertion member 130. The parts of second sauce material 112 which have moved and disappeared are immediately filled by first sauce material 102. As a result, second sauce material 112, as shown in Fig. 11, forms a pattern in which schematically heart shapes are continuously formed on a circle.

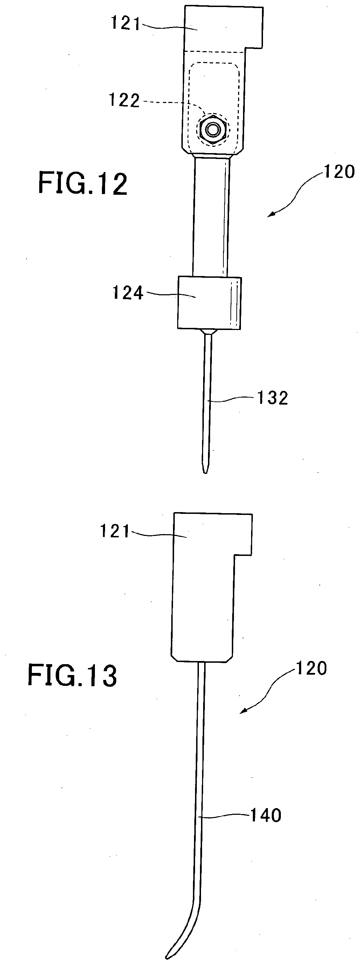

As a variant example of insertion member 130, insertion member 132, as shown in Fig. 12, extends in a straight line vertically downward from weight member 124 supported by oscillation axis 122.

As a variant example of inscribing rod portion 120, the bottom portion of an insertion member 140 of a curved elastic material is affixed in such a way as to be downstream of inscribing rod support body 121, so as to follow the movement of first sauce layer 102L and second sauce material 112, as shown in Fig. 13.

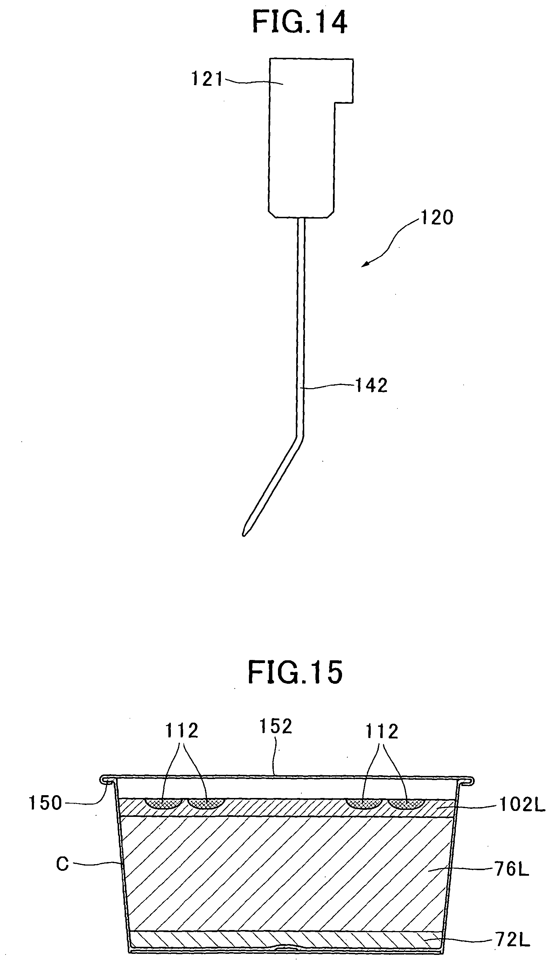

As an additional variant example of inscribing rod portion 120, the bottom portion of an insertion member 142 of a bent elastic material is affixed in such a way as to be downstream of inscribing rod support body 121, so as to follow the direction of movement of first sauce layer 102L and second sauce material 112, as shown in Fig. 14.

In these two variant examples of inscribing rod portion 120, what is inserted into first sauce layer 102L and second sauce material 112 is the curved portion of insertion member 140 or the bent portion of insertion member 142.

Cup cap 46, as shown in Fig. 15, is sealed by hot adhesion of a sealing sheet 152 to a flange portion 150 around the top opening on cup C using known methods.

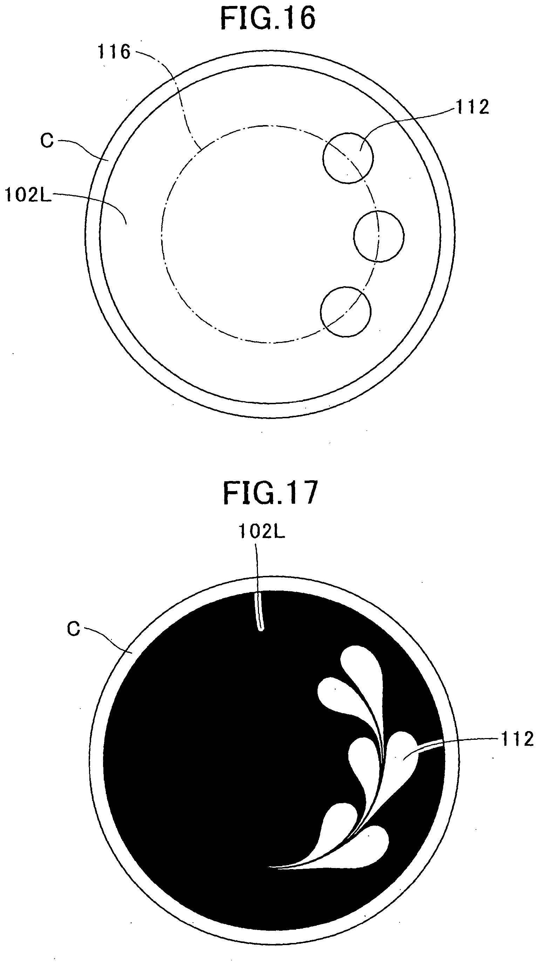

As a first variant example of the operation of second sauce material supply portion 42, second sauce material 112 is dripped in three locations 45° apart, as shown in Fig. 16. Thereafter, in the same way as described above, the second sauce material 112 is formed in a pattern in which schematically heart shapes are continuously disposed at three locations on a circle using inscribing rod portion 120, as shown in Fig. 17.

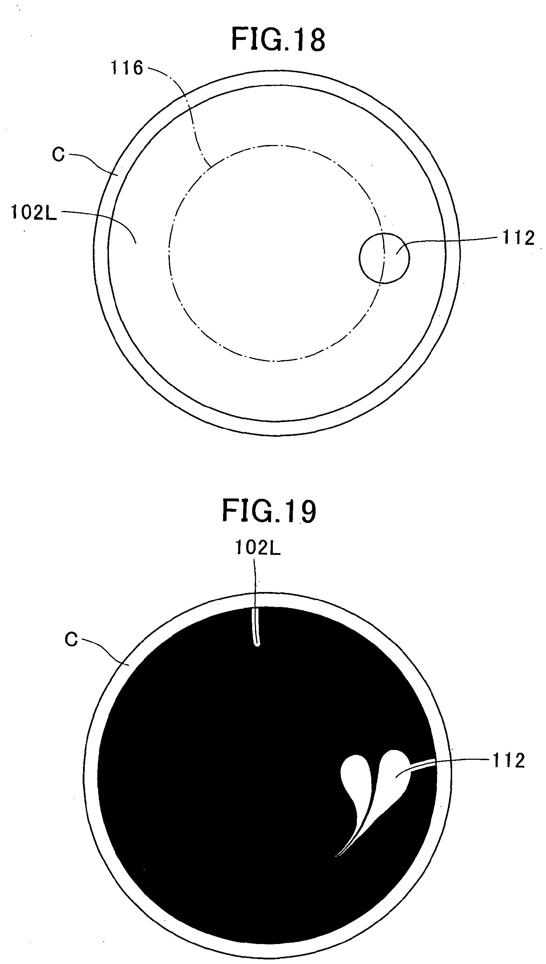

As a second variant example of the operation of second sauce material supply portion 42, second sauce material 112 is dripped in one location, as shown in Fig. 18. Thereafter, schematically a single heart shape is formed as shown in Fig. 19 by inscribing with inscribing rod portion 120, in the same way as described above.

### [Reference Signs List]

- C:: cup
- 1:: surface patterned ice cream manufacturing apparatus
- 10:: conveyer belt
- 20:: cup transport portion
- 22:: cup supply portion
- 28:: ice cream material supply portion
- 30:: surface flattening portion
- 32:: ice cream surface hardening portion
- 40:: first sauce material supply portion
- 42:: second sauce material supply portion
- 44:: sauce inscribing portion
- 46:: cup cap portion
- 50:: stack shoulder portion
- 71:: ice cream container
- 74:: ice cream material supply nozzle
- 76:: ice cream material
- 82:: pushing member
- 90:: liquid nitrogen tank
- 92:: liquid nitrogen injection nozzle
- 100:: first sauce material container
- 102:: first sauce material
- 112:: second sauce material
- 114:: second sauce material supply nozzle
- 116:: sauce pattern circle
- 120:: inscribing rod portion
- 130:: insertion member
- 121:: inscribing rod support body
- 122:: oscillation axis
- 124:: weight member
- 130:: insertion member

## Claims

1. A surface patterned frozen dessert manufacturing method having:
a step for filling ice cream material into a cup and forming an ice cream layer;
a step for flattening the top surface of an ice cream layer;
a step for forming a first sauce layer on a flattened ice cream layer;
a step for forming, at the top layer portion of the first sauce layer, at least one second sauce layer of a color different from the first sauce layer, on the same sauce pattern circle; and
a step for moving an inscribing member, supported so that a free end thereof can be displaced relative to a support position in the circumferential direction of the sauce pattern, along the circumference of the sauce pattern.

2. The surface patterned frozen dessert manufacturing method of Claim 1, wherein the inscribing member is axially supported so as to be able to oscillate in the sauce pattern circumferential direction.

3. The surface patterned frozen dessert manufacturing method of Claim 1, having a step for cooling and hardening the surface of ice cream prior to the step for forming a first sauce layer.

4. The surface patterned frozen dessert manufacturing method of Claim 3, wherein the step in which the ice cream surface is cooled and hardened comprises a step for pouring in liquid nitrogen in a liquid state.

5. A surface patterned frozen dessert manufacturing apparatus having:
an ice cream supply portion for filling ice cream material into a cup and forming an ice cream layer;
an ice cream flattening portion for flattening the top surface of the ice cream layer;
a first sauce material supply portion for forming a first sauce layer on the top surface of the flattened ice cream layer;
a second sauce material supply portion for providing, at the top layer portion of the first sauce layer, at least one second sauce layer of a color different from the first sauce layer, on the same sauce pattern circle; and
a sauce inscribing portion for moving an inscribing member, supported so that a free end thereof can be displaced relative to a support position in the circumferential direction of the sauce pattern, along the circumference of the sauce pattern.

6. The surface patterned frozen dessert manufacturing apparatus of Claim 5, wherein the inscribing member is axially supported so as to be able to oscillate in the sauce pattern circumferential direction.

7. The surface patterned frozen dessert manufacturing apparatus of Claim 5, wherein the apparatus further has an ice cream material hardening portion for cooling and hardening the ice cream surface.

8. The surface patterned frozen dessert manufacturing apparatus of Claim 7, wherein the ice cream material hardening portion comprises a hardening portion for pouring liquid nitrogen in a liquid state.

## Patentansprüche

1. Ein Herstellungsverfahren für ein oberflächengemustertes gefrorenes Dessert mit:
einem Schritt zum Einfüllen von Speiseeismaterial in einen Becher und Bilden einer Speiseeisschicht;
einem Schritt zum Glätten der Oberseite einer Speiseeisschicht;
einem Schritt zum Bilden einer ersten Saucenschicht auf einer geglätteten Speiseeisschicht;
einem Schritt zum Bilden, im Bereich der obersten Schicht der ersten Saucenschicht, mindestens einer zweiten Saucenschicht mit einer Farbe, die sich von der ersten Saucenschicht unterscheidet, auf dem gleichen kreisförmigen Saucenmuster; und
einem Schritt zum Bewegen eines Beschriftungselements, das so gestützt ist, dass ein freies Ende davon relativ zu einer Stützposition in Umfangsrichtung des Saucenmusters verschoben werden kann, entlang der Umfangsrichtung des Saucenmusters.

2. Das Herstellungsverfahren für ein oberflächengemustertes gefrorenes Dessert nach Anspruch 1, wobei das Beschriftungselement axial gestützt ist, um in der Umfangsrichtung des Saucenmusters oszillieren zu können.

3. Das Herstellungsverfahren für ein oberflächengemustertes gefrorenes Dessert nach Anspruch 1 mit einem Schritt zum Abkühlen und Härten der Oberfläche des Speiseeises vor dem Schritt zum Bilden einer ersten Saucenschicht.

4. Das Herstellungsverfahren für ein oberflächengemustertes gefrorenes Dessert nach Anspruch 3, wobei der Schritt, bei dem die Speiseeisoberfläche abgekühlt und gehärtet wird, einen Schritt zum Einfüllen von Flüssigstickstoff in flüssigem Zustand umfasst.

5. Eine Herstellungsvorrichtung für ein oberflächengemustertes gefrorenes Dessert mit:
einem Abschnitt zur Bereitstellung von Speiseeis zum Einfüllen von Speiseeismaterial in einen Becher und Bilden einer Speiseeisschicht;
einem Abschnitt, bei dem Speiseeis geglättet wird, zum Glätten der Oberseite der Speiseeisschicht;
einem Abschnitt zur Bereitstellung eines ersten Saucenmaterials zum Bilden einer ersten Saucenschicht auf der Oberseite der geglätteten Speiseeisschicht;
einem Abschnitt zur Bereitstellung eines zweiten Saucenmaterials zum Bereitstellen, im Bereich der obersten Schicht der ersten Saucenschicht, mindestens einer zweiten Saucenschicht mit einer Farbe, die sich von der ersten Saucenschicht unterscheidet, auf dem gleichen kreisförmigen Saucenmuster; und
einem Saucenbeschriftungsabschnitt zum Bewegen eines Beschriftungselements, das so abgestützt ist, dass ein freies Ende davon in Umfangsrichtung des Saucenmusters entlang des Umfangs des Saucenmusters in Bezug auf eine Stützposition verschoben werden kann.

6. Die Herstellungsvorrichtung für ein oberflächengemustertes gefrorenes Dessert nach Anspruch 5, wobei das Beschriftungselement axial gestützt ist, um in der Umfangsrichtung des Saucenmusters oszillieren zu können.

7. Die Herstellungsvorrichtung für ein oberflächengemustertes gefrorenes Dessert nach Anspruch 5, wobei die Vorrichtung ferner einen Abschnitt zur Härtung von Speiseeismaterial für das Abkühlen und Härten der Speiseeisoberfläche aufweist.

8. Die Herstellungsvorrichtung für ein oberflächengemustertes gefrorenes Dessert nach Anspruch 7, wobei der Abschnitt zur Härtung von Speiseeismaterial einen Abschnitt zur Härtung für das Einfüllen von Flüssigstickstoff in flüssigem Zustand umfasst.

## Revendications

1. Méthode de fabrication d'un dessert congelé doté d'un motif sur sa surface, ayant:
une étape pour remplir une coupelle avec un matériau de crème glacée et former une couche de crème glacée ;
une étape pour aplanir la surface supérieure de la couche de crème glacée ;
une étape pour former une première couche de sauce sur une couche de crème glacée aplanie ;
une étape pour former, sur la partie de couche supérieure de la première couche de sauce, au moins une deuxième couche de sauce d'une couleur différente de celle de la première couche de sauce, sur le même cercle de motif de sauce ; et
une étape pour déplacer un élément d'inscription, supporté de façon qu'une extrémité libre de celui-ci puisse être déplacée par rapport à une position de support dans la direction circonférentielle du motif de sauce, le long de la circonférence du motif de sauce.

2. Méthode de fabrication d'un dessert congelé doté d'un motif sur sa surface selon la revendication 1, dans laquelle l'élément d'inscription est supporté axialement de façon à pouvoir osciller dans la direction circonférentielle du motif de sauce.

3. Méthode de fabrication d'un dessert congelé doté d'un motif sur sa surface selon la revendication 1, ayant une étape pour refroidir et durcir la surface de crème glacée avant l'étape pour former une première couche de sauce.

4. Méthode de fabrication d'un dessert congelé doté d'un motif sur sa surface selon la revendication 3, dans laquelle l'étape dans laquelle la surface de crème glacée est refroidie et durcie comprend une étape pour verser de l'azote liquide à l'état liquide.

5. Dispositif de fabrication de dessert congelé doté d'un motif sur sa surface ayant :
une partie de fourniture de crème glacée pour remplir une coupelle avec un matériau de crème glacée et former une couche de crème glacée ;
une partie d'aplanissement de crème glacée pour aplanir la surface supérieure de la couche de crème glacée ;
une partie de fourniture d'un premier matériau de sauce pour former une première couche de sauce sur la surface supérieure de la couche de crème glacée aplanie ;
une partie de fourniture d'un deucième matériau de sauce pour disposer, sur la partie de couche supérieure de la première couche de sauce, au moins une deuxième couche de sauce d'une couleur différente de celle de la première couche de sauce, sur le même cercle de motif de sauce ; et
une partie d'inscription de sauce pour déplacer un élément d'inscription, supporté de façon qu'une extrémité libre de celui-ci puisse être déplacée par rapport à une position de support dans la direction circonférentielle du motif de sauce, le long de la circonférence du motif de sauce.

6. Dispositif de fabrication de dessert congelé doté d'un motif sur sa surface selon la revendication 5, dans lequel l'élément d'inscription est supporté axialement de façon à pouvoir osciller dans la direction circonférentielle du motif de sauce.

7. Dispositif de fabrication de dessert congelé doté d'un motif sur sa surface selon la revendication 5, lequel dispositif comprend en outre une partie de durcissement de matériau de crème glacée pour refroidir et durcir la surface de la crème glacée.

8. Dispositif de fabrication de dessert congelé doté d'un motif sur sa surface selon la revendication 7, dans lequel la partie de durcissement de matériau de crème glacée comprend une partie de durcissement pour verser de l'azote liquide à l'état liquide.
